# EUROPEAN PATENT APPLICATION

(11) **EP 1 643 685 A2**
(43) Date of publication of application: **05.04.2006**
(21) Application number: 05018948.9
(22) Date of filing: 31.08.2005
(51) Int. Cl.: H04L 12/28

(54) **Automatic activation and deactivation of wireless network adapter**

(30) Priority: 01.10.2004 US 957229
(71) Applicant: Hewlett-Packard Development Company, L.P., Houston, TX 77070 (US)
(72) Inventor: Dougherty, Michael Joseph, Houston, Texas 77070 (US); Powell, John Phillip, Spring, Texas 77379 (US); Krancher, Robert Eugene, Houston, Texas 77092 (US)
(74) Representative: Schoppe, Fritz

(57) **Abstract**

Systems and methods of automatic activation and deactivation of a wireless network adapter (118) are disclosed. In one embodiment, a wireless network adapter and a wired network adapter (116) included in a system (100) are controlled by determining if the wired network adapter has established a wired communication link and, if the wired communication link has been established, automatically disabling the wireless network adapter.

## Description

### TECHNICAL FIELD

The following description relates to computing devices in general and to controlling a wireless network adapter in particular.

### BACKGROUND

Portable computers often include multiple network adapters in order to enable such portable computers to communicate with different types of networks. In one configuration, for example, a portable computer includes both a wireless network adapter and a wired network adapter. The wireless network adapter is used to communicatively couple the portable computer to a wireless network over a wireless communication link (for example, a radio frequency (RF) communication link or an infrared (IR) communication link). The wired network adapter is used to communicatively couple the portable computer to a wired network over a wired communication link (for example, over copper-twisted pair cabling).

In one typical configuration, an operating system executing on the portable computer detects any network adapters that are included in the portable computer and attempts to establish a communication link using each of the network adapters. The operating system attempts to establish a communication using each of the network adapters, for example, when the portable computer is initially started and/or from time to time during normal operation. In such a configuration, when the portable computer includes both a wired network adapter that communicatively couples the portable computer to a wired network and a wireless network adapter that communicatively couples the portable computer to a wireless network, the operating system typically routes all network traffic over only one of the networks. For example, in one implementation, the operating system assumes that a wired network will provide faster, more reliable, and/or more secure network communications than a wireless network. As a result, when the portable computer is coupled to a wired network, the operating system communicates all network traffic over the wired network.

In such a configuration, when the portable computer is coupled to a wired network and, as a result, the operating system communicates all network traffic over the wired network, the operating system still attempts to establish a wireless communication link with a wireless network using the wireless network adapter. In some situations (for example, where the portable computer is located at the outer range of a wireless network or where there is substantial interference), the operating system displays for a user of the portable computer various error or warning messages associated with the operating system's attempts to establish and/or maintain the wireless communication link with the wireless network. The operating system typically displays such error or warning messages even though the operating system is not using the wireless communication link (because a wired communication link has been successfully established). Such error or warning messages can be confusing or distracting for a user of the portable computer.

If a user of the portable computer wishes to disable the wireless network adapter (for example, to avoid having the operating system display error or warning messages regarding the wireless network adapter or for any other reason), the operating system (or an application program that interacts with the wireless network adapter) typically provides a software interface by which the user is able to manually disable the wireless network adapter. Also, in some configurations, the portable computer includes a hardware switch or button by which the user is able to manually disable the wireless network adapter. However, after manually disabling the wireless network adapter, if the user subsequently wishes to make use of the wireless network adapter (for example, because the user has disconnected the wired network adapter from a wired network), the user must manually enable the wireless network adapter using the software interface or the hardware switch.

### SUMMARY

In one embodiment, a method controls a wireless network adapter and a wired network adapter included in a system. The method comprises determining if the wired network adapter has established a wired communication link and, if the wired communication link has been established, automatically disabling the wireless network adapter.

In another embodiment, a system comprises a wired network adapter communicatively coupled to a central processing unit and a wireless network adapter communicatively coupled to the central processing unit. The wireless network adapter is automatically disabled when a wired communication link has been established by the wired network adapter.

The details of various embodiments of the claimed invention are set forth in the accompanying drawings and the description below. Other features and advantages will become apparent from the description, the drawings, and the claims.

### DRAWINGS

FIG. 1 is a high-level block diagram of one embodiment of a computing system.

FIG. 2 is a flow diagram of one embodiment of a method of indicating if a wireless network adapter should be automatically disabled if a wired network adapter is able to establish a wired communication link.

FIG. 3 is a flow diagram of one embodiment of a method of automatically disabling a wireless network adapter when a wired network adapter establishes a wired communication link with a network or other device.

Like reference numbers and designations in the various drawings indicate like elements.

### DETAILED DESCRIPTION

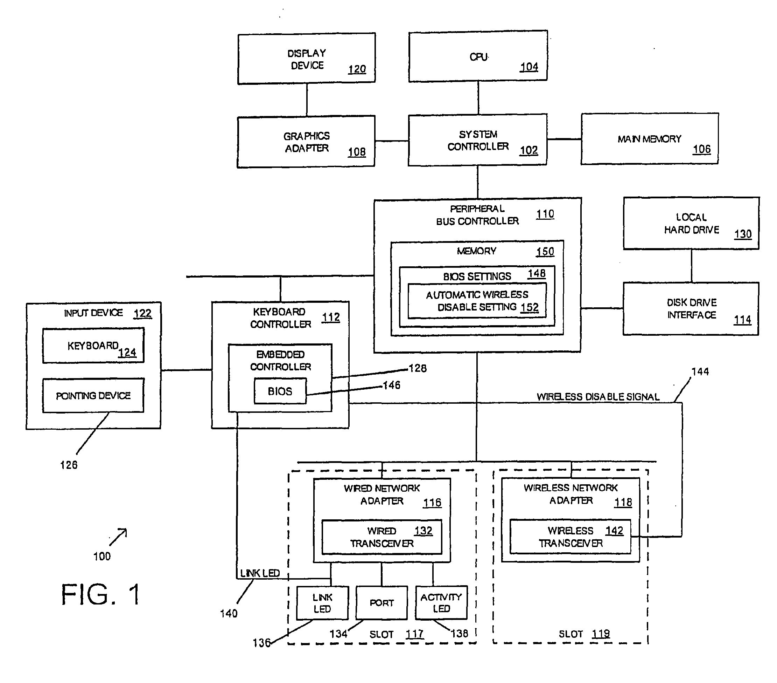

FIG. 1 is a high-level block diagram of one embodiment of a computing system 100. In one implementation, the computing system 100 comprises a portable computer. Other implementations and embodiments are implemented in other ways, for example, in or as a desktop computer, server computer, or personal digital assistant.

In the embodiment shown in FIG. 1, the system 100 comprises a system controller 102 (also referred to here as the "northbridge" 102) that couples a central processing unit (CPU) 104, main memory 106, a graphics adapter 108, and a peripheral bus controller 110 to one another and controls the flow of data among these components. The peripheral bus controller 110 (also referred to here as the "southbridge" 110) couples the system controller 102 (and the components connected thereto) to various other lower-speed components of the system 100 and controls the flow of data among these components. In the embodiment shown in FIG. 1, a keyboard controller 112, a disk drive interface 114, a wired network adapter 116 and a wireless network adapter 118 are coupled to the peripheral bus controller 110.

The CPU 104 executes various items of software, including, for example, an operating system and one or more applications. Typically, a portion of the software executed by the CPU 104 and one or more data structures used by the software during execution are stored in the main memory 106. Main memory 106 comprises, in one embodiment, any suitable form of random access memory (RAM) now known or later developed, such as dynamic random access memory (DRAM).

The CPU 104 interacts with the graphics adapter 108 to display information on a display device 120 coupled to the graphics adapter 108. In one embodiment where the system 100 comprises a portable computer, the display device 120 comprises a liquid crystal display that is integrated into the portable computer. In such an embodiment, the graphics adapter 108 also includes or is coupled to an external display interface to which a display device external to the portable computer can be coupled.

The CPU 104 interacts with the keyboard controller 112 to receive input from one or more input devices 122 coupled to the keyboard controller 112. In the embodiment shown in FIG. 1, the input devices 122 comprise a keyboard 124 and a pointing device 126 (such as a mouse). In one embodiment where the system 100 comprises a portable computer, the keyboard 124 and the pointing device 126 are integrated into the portable computer. In such an embodiment, a keyboard and/or pointing device external to the portable computer can be coupled to the keyboard controller 112 via one or more dedicated keyboard/pointing device interfaces (for example, a PS/2 interface) or one or more general input/output interfaces (for example, a universal serial port (USB) interface).

The keyboard controller 112, in the embodiment shown in FIG. 1, also comprises an embedded controller 128 that controls the operation of one or more of the other components in the system 100. For example, in one implementation of such an embodiment, the embedded controller 128 implements functionality that enables the system 100 to support the Advanced Configuration and Power Interface (ACPI) specification. In such an implementation, the embedded controller 128 interacts with configuration and/or power management interfaces provided by various components in the system 100.

The disk drive interface 114 serves as an interface to one or more disk drive devices (such as a hard drive, floppy disk drive, and/or CDROM drive) included in or coupled to the system 100. In the particular embodiment shown in FIG. 1, the disk drive interface 114 is used to communicatively couple a hard drive 130 to the other components of the system 100.

The wired network adapter 116 is used to couple the system 100 to, and send and receive data from, a network or other device using a wired communication link (for example, a copper-twisted pair cable or a fiber optic cable). The wired network adapter 116 includes a wired network transceiver 132 that implements the functionality for sending and receiving data to and from the network or other device over the wired communication link. In one embodiment, the wired network adapter 116 supports one or more of the Institute for Electrical and Electronics Engineers (IEEE) 802.3 family of standards (also referred to here as the "ETHERNET" networking protocol).

In the embodiment shown in FIG. 1, the system 100 comprises a slot 117 (also referred to here as the "wired network adapter slot 117") that is communicatively coupled to the peripheral bus controller 110. When the wired network adapter 116 is inserted into the slot,117, the wired network adapter 116 is communicatively coupled to the peripheral bus controller 110. In one implementation of such an embodiment, the slot 117 comprises a general-purpose input/output slot (for example, a PC card slot) into which a range of cards or other devices (for example, other types of network adapters, modems, etc.) can be inserted. In another implementation of such an embodiment, the slot 117 is especially adapted to receive the wired network adapter 116 (for example, where the wired network adapter 116 is implemented as a Mini Peripheral Component Interconnect (Mini-PCI) card and the slot 117 is customized to receive that card). In other embodiments, the wired network adapter 116 is integrated into the system 100 in other ways.

In the embodiment shown in FIG. 1, a port 134 is coupled to the wired transceiver 132. The physical communication media used to couple the wired network adapter 116 to the network or other device is connected to the port 134. In one embodiment, the port 134 comprises an RJ-45 port. At least one light emitting diode (LED) provides information related to any wired communication link established using the wired network adapter 116. In the embodiment shown in FIG. 1, the system 100 comprises a link LED 136 and an activity LED 138. The link LED 136 is illuminated when a wired communication link exists between the wired network adapter 116 and the network or other device. The activity LED 138 is illuminated when data is sent or received on the wired communication link. In the embodiment shown in FIG. 1, the link LED 136 is controlled by a signal 140 output by the wired transceiver 132. This signal 140 is also referred to here as the "LINK LED" signal 140.

The wireless network adapter 118 is used to wirelessly couple the system 100 to, and send and receive data from, a network or other device using a wireless communication link (for example, an RF or IR wireless communication link). The wireless network adapter 118 includes a wireless network transceiver 142 that implements the functionality for sending and receiving data to and from the network or other device over the wireless communication link. In one embodiment, the wireless network adapter 118 supports one or more of the IEEE 802.11 family of standards.

In the embodiment shown in FIG. 1, the system 100 comprises a slot 119 (also referred to here as the "wireless network adapter slot 119") that is communicatively coupled to the peripheral bus controller 110. When the wireless network adapter 118 is inserted into the slot 119, the wireless network adapter 118 is communicatively coupled to the peripheral bus controller 110. In one implementation of such an embodiment, the slot 119 comprises a general-purpose inpudoutput slot (for example, a PC card slot) into which a range of cards or other devices (for example, other types of network adapters, modems, etc.) can be inserted. In another implementation of such an embodiment, the slot 119 is especially adapted to receive the wireless network adapter 118 (for example, where the wireless network adapter 118 is implemented as a Mini-PCI card and the slot 119 is customized to receive that card). In other embodiments, the wireless network adapter 118 is integrated into the system 100 in other ways.

In the embodiment shown in FIG. 1, a signal 144 (also referred to here as the "wireless disable signal" 144) is output by the embedded controller 128 of the keyboard controller 112 to indicate if the wireless transceiver 142 of the wireless network adapter 118 should be disabled. The embedded controller 128, in such an embodiment, asserts the wireless disable signal 144 when a wired communication link has been established between the wired network adapter 116 and a network or other device. The embedded controller 128 is informed of whether such a wired communication link has been established by the LINK LED signal 140.

The system 100 also comprises a basic input/output system (BIOS) 146 that provides an interface between the hardware of the system 100 and the operating system and other software executing on the CPU 104. In the embodiment shown in FIG. 1, the BIOS 146 is implemented as software or firmware that is executed by the embedded controller 128. Various system configuration settings 148 (also referred to here as a "BIOS settings" 148) that are used by the BIOS 146 are stored in memory 150. In the particular embodiment shown in FIG. 1, the memory 150 comprises non-volatile memory (for example, complimentary metal oxide (CMOS) memory) that is incorporated into the peripheral bus controller 110. In other embodiments, the memory 150 in which the BIOS settings 148 are stored is located elsewhere in the system 100 and/or is implemented using other types of memory now known or later developed (for example, others types of non-volatile memory).

In the embodiment shown in FIG. 1, BIOS settings 148 include a setting 152 (also referred to here as the "automatic wireless disable setting" 152) that indicates if the wireless network adapter 118 should be automatically disabled when the wired network adapter 116 is able to establish a wired communication link with a network or a device. A user of the system 100 is able to use the BIOS 146 to view and change this setting. As used herein, the automatic wireless disable setting 152 is "set" when the automatic wireless disable setting 152 contains a value indicating that the wireless network adapter 118 should be automatically disabled when the wired network adapter 116 is able to establish a wired communication link with a network or a device and is "cleared" when the automatic wireless disable setting 152 contains a value indicating that the wireless network adapter 118 should not be automatically disabled when the wired network adapter 116 is able to establish a wired communication link with a network or a device.

In some other embodiments, if a particular condition (in addition to or instead of whether an automatic wireless disable setting is set) is true, the wireless network adapter 118 is automatically disabled when the wired network adapter 116 is able to establish a wired communication link with a network or a device. In one such other embodiment, the condition is a function of one or more power-related parameters or settings. In one example, if the system 100 is operating on battery power, the wireless network adapter 118 is automatically disabled when the wired network adapter 116 is able to establish a wired communication link. In another example, if the system 100 is operating on battery power and the amount of power remaining in the battery falls below a predetermined threshold, the wireless network adapter 118 is automatically disabled when the wired network adapter 116 is able to establish a wired communication link. In one such embodiment, a user is able to configure (for example, via the BIOS 146) the content of the condition and/or whether the wireless network adapter 118 should be automatically disabled when a wired communication link is established while the condition is true. In another implementation, one or more of these options are not user configurable.

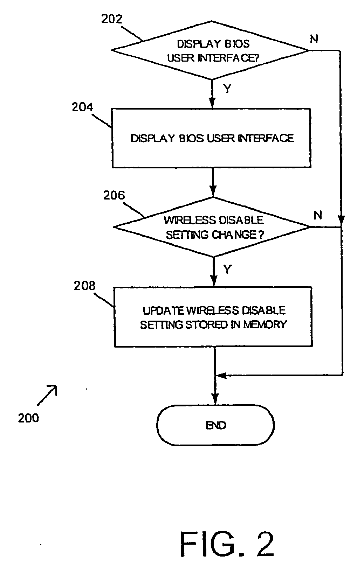

FIG. 2 is a flow diagram of one embodiment of a method 200 of indicating if a wireless network adapter should be automatically disabled if a wired network adapter is able to establish a wired communication link. The embodiment of method 200 shown in FIG. 2 is described here as being implemented using the system 100 of FIG. 1. In particular, the processing performed by method 200, in such an embodiment, is implemented by the BIOS 146 of system 100. Other embodiments of method 200 are implemented in other ways.

The BIOS 146 determines when a user interface for the BIOS 146 (also referred to here as the "BIOS user interface") should be displayed (block 202). When the BIOS 146 determines that the BIOS user interface should be displayed, the BIOS user interface is displayed on the display device 120 of the system 100 (block 204). For example, in one embodiment, when the system 100 is initially powered on or the system 100 is reset, the system 100 loads and executes the BIOS 146 during the system boot process. The BIOS 146, as a part of the system boot process, prompts the user to press a predetermined key on the keyboard 124 (for example, the "F10" key) if the user wishes to view and/or modify the BIOS settings 148. If the user presses the predetermined key, the BIOS 146 displays a BIOS user interface in which one or more of the BIOS settings 148 are displayed on the display device 120 for the user. In such an embodiment, one of the BIOS settings 148 that is displayed is the automatic wireless disable setting 152.

If the user of the system 100 changes the current automatic wireless disable setting 152 (checked in block 206), the BIOS 146 updates the value stored in the memory 150 (block 208). For example, when the user provides input (for example, using the keyboard 120) indicating that the wireless network adapter 118 should be automatically disabled when the wired network adapter 116 is able to establish a wired communication link, the BIOS 146 sets the automatic wireless disable setting 152. When the user provides input indicating that the wireless network adapter 118 should not be automatically disabled when the wired network adapter 116 is able to establish a wired communication link, the BIOS 146 clears the automatic wireless disable setting 152.

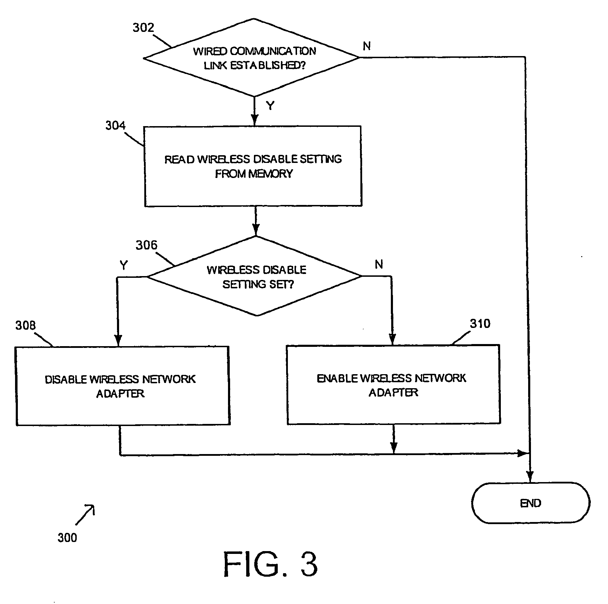

FIG. 3 is a flow diagram of one embodiment of a method 300 of automatically disabling a wireless network adapter when a wired network adapter establishes a wired communication link with a network or other device. The embodiment of method 300 shown in FIG. 3 is described here as being implemented using the system 100 of FIG. 1. In particular, the processing performed by method 300, in such an embodiment, is implemented in the embedded controller 128 of system 100. Other embodiments of method 300 are implemented in other ways. In one embodiment, method 300 is performed by the embedded controller 128 during the system startup process (for example, at an initial power-on or after a system reset). In another embodiment, method 300, in addition to or instead of being performed during system startup, is performed at other times (for example, whenever the state of the wired network adapter 116 changes).

When method 300 is performed, the embedded controller 128 determines if a wired communication link is currently established between the wired network adapter 116 and a network or other device (block 302). In one embodiment, the embedded controller 128 makes this determination based on the LINK LED signal 140. If the wired transceiver 132 asserts the LINK LED signal 140, a wired communication link is currently established between the wired network adapter 116 and a network or other device. If the wired transceiver 132 does not assert the LINK LED signal 140, a wired communication link is not currently established between the wired network adapter 116 and a network or other device.

If the embedded controller 128 determines that a wired communication link is currently established between the wired network adapter 116 and a network or a device, the embedded controller 128 reads the automatic wireless disable setting 152 included in the BIOS settings 148 that are stored in memory 150 (block 304). If the automatic wireless disable setting 152 is set (checked in block 306), the embedded controller 128 disables the wireless network adapter 118 (block 308). When the wireless network adapter 118 is disabled, the wireless network adapter 118 does not attempt to establish a wireless communication link with a network or other device. In one implementation of such an embodiment, the wireless transceiver 142 included in the wireless network adapter 118 is powered down so the transceiver 142 is unable to transmit or receive. In one embodiment, implemented using the embodiment of system 100 shown in FIG. 1, the embedded controller 128 disables the wireless network adapter 118 by asserting the wireless disable signal 144. When the wireless disable signal 144 is asserted, the wireless transceiver 142 does not transmit or receive. Moreover, from the perspective of the operating system executing on the CPU 104, the wireless network adapter 118 is disabled and, as a result, the operating system will not repeatedly display error or warning messages associated with the wireless network adapter 118 attempting to establish or maintain a wireless communication link.

If a wired communication link is not currently established or if a wired communication link is currently established but the wireless disable setting 152 is cleared, the wireless network adapter 118 is not disabled and instead is enabled (block 310).

Using method 200 and method 300, a user of the system 100 is able to configure the system 100 so that the system 100 will automatically disable the wireless network adapter 118 when the wired network adapter 116 has established a wired communication link with a network or other device but have the wireless network adapter 118 be automatically enabled (that is, not disabled) when the wired network adapter 116 is unable to establish a wired communication link. The wireless adapter network 118 is disabled and enabled automatically (that is, without requiring the user to actuate a hardware switch or interact with a software interface in order to manually disable and enable the wireless network adapter 118). Moreover, the particular embodiments shown in FIGS. 2 and 3 are implemented in a manner that is independent of the particular operation system that is executed on the system 100 (though some other embodiments are implemented in an operating-system dependant manner, for example, where the automatic disabling and enabling of a wireless network adapter is implemented in whole or in part by a device driver used by an operating system).

The methods and techniques described here may be implemented in digital electronic circuitry, or with a programmable processor (for example, a special-purpose processor or a general-purpose processor such as a computer) firmware, software, or in combinations of them. Apparatus embodying these techniques may include appropriate input and output devices, a programmable processor, and a storage medium tangibly embodying program instructions for execution by the programmable processor. A process embodying these techniques may be performed by a programmable processor executing a program of instructions to perform desired functions by operating on input data and generating appropriate output. The techniques may advantageously be implemented in one or more programs that are executable on a programmable system including at least one programmable processor coupled to receive data and instructions from, and to transmit data and instructions to, a data storage system, at least one input device, and at least one output device. Generally, a processor will receive instructions and data from a read-only memory and/or a random access memory. Storage devices suitable for tangibly embodying computer program instructions and data include all forms of non-volatile memory previously or now known or later developed, including by way of example semiconductor memory devices, such as erasable programmable read-only memory (EPROM), electrically erasable programmable read-only memory (EEPROM), and flash memory devices; magnetic disks such as internal hard disks and removable disks; magneto-optical disks; and DVD disks. Any of the foregoing may be supplemented by, or incorporated in, specially-designed application-specific integrated circuits (ASICs).

## Claims

1. A method of controlling a wireless network adapter (118) and a wired network adapter (116) included in a system (100), the method comprising:
determining if the wired network adapter has established a wired communication link; and
if the wired communication link has been established, automatically disabling the wireless network adapter.

2. The method of claim 1, wherein determining if the wired network adapter has established the wired communication link and, if the wired communication link has been established, automatically disabling the wireless network adapter are performed during a system boot process.

3. The method of claim 1, further comprising determining if a disable setting (152) has been set, wherein automatically disabling the wireless network adapter if the wired communication link has been established comprises automatically disabling the wireless network adapter if the wired communication link has been established and the disable setting has been set.

4. The method of claim 1, wherein the wireless network adapter and the wired network adapter are included in a portable computer.

5. The method of claim 1, wherein if the wired communication link has been established, automatically disabling the wireless network adapter comprises automatically disabling the wireless network adapter when the wired communication link has been established if another condition is true.

6. A system (100), comprising:
a wired network adapter (116) communicatively coupled to a central processing unit (104); and
a wireless network adapter (118) communicatively coupled to the central processing unit;
wherein the wireless network adapter is automatically disabled when a wired communication link has been established by the wired network adapter.

7. A system (100), comprising:
a wireless network (118) adapter communicatively coupled to a central processing unit (104); and
a slot (117) to receive a wired network adapter (116) and communicatively couple the wired network adapter to the central processing unit;
wherein the wireless network adapter is automatically disabled when the wired network adapter is inserted in the slot and a wired communication link has been established by the wired network adapter.

8. The system of claim 7, wherein the wireless network adapter is automatically disabled when the wired network adapter is inserted in the slot, the wired communication link has been established by the wired network adapter, and if a disable setting (152) is set.

9. A system (100), comprising:
a slot (119) to receive a wireless network adapter (118) and communicatively couple the wireless network adapter to a central processing unit (104); and
a wired network adapter (116) communicatively coupled to the central processing unit (104);
wherein the wireless network adapter is automatically disabled when the wireless network adapter is inserted in the slot and a wired communication link has been established by the wired network adapter.

10. A system (100), comprising:
a wireless network adapter slot (119) to receive a wireless network adapter (118); and
a wired network adapter slot (117) to receive a wired network adapter (116);
wherein when the wireless network adapter is inserted into the wireless network adapter slot, the wireless network adapter is automatically disabled when the wired network adapter is inserted in the wired network adapter slot and a wired communication link has been established by the wired network adapter.
